# EUROPÄISCHE PATENTANMELDUNG

(11) **EP 3 236 282 A1**
(43) Veröffentlichungstag der Anmeldung: **25.10.2017**
(21) Anmeldenummer: 16166679.7
(22) Anmeldetag: 22.04.2016
(51) Int. Cl.: G01S 7/486, G01S 7/481, G01S 7/491, G01S 17/42, G01S 17/66

(54) **DYNAMIKERWEITERUNG EINER DISTANZMESSVORRICHTUNG MIT EINEM VARIABLEN OPTISCHEN ABSCHWÄCHELEMENT IM SENDEKANAL**

(71) Anmelder: Hexagon Technology Center GmbH, 9435 Heerbrugg (CH)
(72) Erfinder: HINDERLING, Jürg, CH-9437 Marbach (CH); SINGER, Julien, CH-9442 Berneck (CH); BESTLER, Simon, D-88085 Langenargen (DE)
(74) Vertreter: Gyaja, Christoph Benjamin

(57) **Zusammenfassung**

Die Erfindung betrifft ein Vermessungsgerät, insbesondere Tachymeter, Laserscanner, Profiler, oder Lasertracker, mit einem elektronischen Laserdistanzmessmodul, das einen optischen Sendekanal mit einer Sendeeinheit und einen optischen Empfangskanal mit einer Empfangseinheit für Lasermessstrahlung umfasst, wobei die Strahlführung im elektronischen Laserdistanzmessmodul vermittels einer Faseroptik ausgebildet ist und wobei im optischen Sendekanal eine einstellbare Abschwächeinheit für eine Abschwächung der von der Sendeeinheit erzeugten Lasermessstrahlung vorgesehen ist.

## Beschreibung

Die Erfindung betrifft ein Vermessungsgerät, insbesondere Tachymeter, Laserscanner, Profiler, oder Lasertracker, mit einem elektronischen Laserdistanzmessmodul, das einen optischen Sendekanal mit einer Sendeeinheit und einen optischen Empfangskanal mit einer Empfangseinheit für Lasermessstrahlung umfasst, wobei im optischen Sendekanal eine Abschwächeinheit für eine Abschwächung der von der Sendeeinheit erzeugten Lasermessstrahlung vorgesehen ist.

Gattungsgemäße optische Abschwächeinheiten oder Abschwächer werden insbesondere in elektronischen Distanzmessmodulen (EDM) eingesetzt. Die Distanzmessmodule sind Baugruppen beispielsweise in Produkten wie Theodolite, Scanner, LIDAR, Profiler, Lasertracker, oder auch in Automobilen.

Die Stärke des Empfangssignals wird einerseits durch den abzudeckenden Distanzbereich anderseits durch die unterschiedliche Reflektivität der Oberflächen der anzumessenden Objekte festgelegt. Insbesondere Objekte mit spiegelnden oder glänzenden Oberflächen erzeugen je nach Einfallswinkel des optischen Messstrahls sehr unterschiedliche Signalamplituden in der Empfangseinheit des Distanzmessers.

In typischen Anwendungen wird ein grosser zu bestimmender Distanzbereich von weniger als 1m bis über mehrere Kilometer abgedeckt, wobei stark diffus lichtstreuende Zielobjekte mit ausgesprochen wenig Rückstreuung als auch prismatische Zielobjekte mit Retroreflexion und höchster optischer Qualität, und entsprechend hoch intensiver Rückstrahlung, angemessen werden sollen.

Die zu vermessenden Zielobjekte sind oft aus Kunststoff oder Metall mit glänzenden Oberflächen, die Signalstärke des gestreuten Lichts zurück zur Distanzmesseinheit ist daher sehr gering, oder bei direkter Rückreflexion zu stark. Im ersten Fall geht das Empfangssignal im Rauschen unter und ist nicht auswertbar. Im zweiten Fall übersteuert der Empfangskanal und die Distanzmessung wird zu ungenau, da die Signallaufzeit des Empfängers und/oder die Signalform sich verändert.

Eine der besonderen Anforderungen für den Einsatz eines Abschwächers in einem EDM ist deshalb ein sehr großer Einstellbereich von sehr niedriger bis extrem hoher optischer Dichte von mindestens 5.0 (=10⁵), verbunden typischerweise mit einem exponentiellen Verlauf der Transmission zwischen diesen beiden Extremzuständen. Der exponentielle Verlauf bedeutet, dass die Abschwächung um einen multiplikativen und nicht um einen additiven Faktor ab- oder zunimmt.

Hauptproblem ist zudem die benötigte Zeit, um die geforderte Signalamplitude einzustellen. Bei herkömmlichen Distanzmessvorrichtungen beträgt die Signaleinstellzeit typischerweise 1 Millisekunde oder länger. Befindet sich die Distanzmessvorrichtung in einem Scanningmode, dann werden mit einer Rate von 100 kHz bis mehrere MHz Messdaten erzeugt. Heute werden in der Regel 3D-Koordinaten mit einer Rate von 1 MHz ausgegeben oder abgespeichert. Um keine Messpunkte an den zu vermessenden Objekten zu verpassen, ist daher eine Signaldynamikregelung mit einer Einstellgeschwindigkeit von besser als 1000 ns, vorzugsweise 300 ns oder 100 ns erforderlich.

Distanzmesssensoren für geodätische oder industrielle Messinstrumente lösen das Problem der Amplitudendynamik bisher sehr unterschiedlich. Diverse Lösungsansätze und Methoden sind aus der Literatur bekannt, wobei die meisten Lösungen Signaleinstellvorrichtungen im Empfangskanal beschreiben.

Bekannte Abschwächer aus dem Stand der Technik bestehen beispielsweise aus einem Graufilterrad, welches mechanisch angetrieben wird und einen linearen oder exponentiellen Graukeilverlauf aufweist. So wird beispielsweise in einem ersten Schritt des Messvorgangs die Signalstärke grob gemessen, worauf ein optischer Graukeil bewegt wird um die Signalamplitude auf einen möglichst optimalen Wert oder zumindest in einen kalibrierten Signalbereich zu regeln, damit die Distanzmessung von hoher Qualität ist. Anstelle eines Graukeils sind auch MEMS-basierte, Spiegel-basierte oder Blenden-basierte elektronisch bewegte Signalabschwächer bekannt, die auf den Freistrahl wirken, also auf nicht fasergeführtes Empfangslicht.

In der Regel befindet sich ein solcher Abschwächer im optischen Empfangskanal eines EDM, dies hauptsächlich um allfälliges Hintergrundlicht vor dem Empfänger fern zu halten. Ein Abschwächer im optischen Sendekanal kann aber auch Vorteile haben wie weiter unten beschrieben ist.

Weitere bekannte Abschwächer basieren beispielsweise auf elektro-optischen Abschwächern oder spatialen Modulatoren, wofür diverse Techniken bekannt sind. Neben Vorrichtungen basierend auf Flüssigkristallen, z.B. die EP 2 937 665, wurden beispielsweise magneto-optische, halbleiterbasierte "Multiquantum Well" Anordnungen oder deformierbare Spiegel zur Verwendung als Abschwächer vorgeschlagen.

Einen Einsatz in kommerziellen Vermessungsinstrumenten haben bisher hauptsächlich Anordnungen basierend auf der Flüssigkristalltechnologie (Hersteller: Boulder Nonlinear Systems) und die MEMS-basierte Mikrospiegeltechnologie (Hersteller: Texas Instruments) gefunden; eine derartige Anordnung für einen Abschwächer wird auch in der US 8 786 834 offenbart.

Vorstellbar sind auch nicht-optische Signalabschwächungen, beispielsweise Signalabschwächung im elektrischen Teil des Signalpfads. Dabei kommen die Ansteuerung der Licht emittierenden Laserdiode, zur Variation der erzeugten Ausgangslichtintensität, Steuerung des APD-Gains der Empfangsdiode sowie die Ansteuerung der elektrischen Verstärkerstufen bis zum Analog-Digital-Wandler in Frage.

Diese Abschwächungsmöglichkeiten werden auch seit jeher eingesetzt, allerdings im Allgemeinen nur in ergänzender und nicht alleiniger Funktion zur Signalabschwächung; denn der Signaldynamikumfang, welcher mit einem Distanzmessmodul zu bewältigen ist, übersteigt die Möglichkeiten dieser elektrischen Abschwächungsmethoden, auch wenn diese kombiniert sind. Beispielsweise ist das Signal von reflektierenden Gegenständen mindestens millionenfach stärker als das von einer dunklen diffusen Objektoberfläche. Elektrische Empfangsschaltungen der oben genannten Art erreichen Dynamiken im Bereich von etwa drei Größenordnungen.

Optische Abschwächer sind hinsichtlich signalübertragungstechnischem Verhalten linear, d.h. sie sind linear sowohl in Phase (Laufzeit) als auch in Amplitude; und die transmittierten Signale sind unverzerrt, was vorteilhaft für eine hohe Messgenauigkeit eines EDM-Moduls ist.

Die am häufigsten eingesetzten optischen Verstärker sind die Faserverstärker wie EDFA (Erbium doped fiber amplifier) oder YDFA(Ytterbium doped fiber amplifier). Die Verstärkung oder Abschwächung kann mittels Pumplaserdioden, welche ihre Energie in den Faserkern der Verstärkungseinheit abgeben, eingestellt werden. Die Schalt- oder Einstellzeiten betragen typisch mehrere 100 Mikrosekunden und sind daher nicht ausreichend schnell.

Weitere Abschwächer oder Verstärker basieren zum Beispiel auf Photodioden mit einstellbarem Gain. Avalanche Photodioden (APD), aber auch Photo-Transistoren eignen sich besonders zur raschen Einstellung der Signalverstärkung und dadurch zur Steuerung der Signalamplitude.

Es werden auch mehrkanalige Empfänger eingesetzt, welche beispielsweise das Empfangssignal einer Photodiode oder eines Photodiodenarrays in mehrere elektronische Empfangskanäle aufteilen. Jeder dieser Empfangskanäle hat eine unterschiedliche Signalverstärkung, wobei mittels eines nachgeschalteten Multiplexers (MUX) praktisch in Echtzeit das Kanalsignal mit der optimalen Amplitude selektiert und der Zeitmessschaltung zugeführt wird. Diese Methode hat jedoch den Nachteil, dass durch das Umschalten der Signaloffset springt und dadurch dem eigentlichen Signal Störungen hinzugefügt werden.

Eine weitere bekannte Methode arbeitet vermittels elektronisch einstellbarem Gain (variable gain amplifier = VGA). Diese rein elektronische Methode ist vermutlich die einfachste und daher recht häufig eingesetzte Realisierung zur Signalsteuerung. Eine spezielle elektronische Schaltung oder ein Schaltbaustein im Empfangssignalkanal passt die Signalamplitude so an, dass beispielsweise am relevanten Eingang der Zeitmessschaltung (wie ADC/FPGA oder TDC) die Signalamplitude im spezifizierten Arbeitsbereich liegt. Dadurch kann eine zuverlässige und genaue Distanzmessung erreicht werden.

Bei den optischen Faserverstärkern wie EDFA oder YDFA kann die Verstärkung oder Abschwächung über einen Bereich von ca. einem Faktor 100 variiert werden. Ein Vorteil ist der Erhalt der hohen Strahlqualität, insbesondere ist bei Verstärkern mit Monomode-Fasern die Strahlung praktisch räumlich beugungsbegrenzt. Die Einstellzeit für Verstärkung oder Abschwächung ist für die zu lösende Aufgabe zu langsam und beträgt ca. 500 Mikrosekunden.

Die optische Impulshöhe von Laserdioden kann direkt durch die Stromamplitude eingestellt werden. Bei gewissen Vorrichtungen wird deshalb auch die emittierte Sendeleistung angepasst. Der dadurch gewonnene Signaldynamikbereich beträgt jedoch nur 10 bis 50.

Bei herkömmliche Distanzmessvorrichtungen mit hohen Amplitudendynamikbereich stösst trotz allen Massnahmen entweder die Empfangs-Photodiode (APD, PIN) oder die Elektronik des Empfangskanals an ihre Grenzen. Einerseits kann der Gain einer APD nur in einem engen Bereich eingestellt werden, anderseits ist die mit einer Gain-Einstellung verknüpfte Änderung der Transitzeit (Delay, Phase) nicht ausreichend exakt zu kalibrieren. Dadurch ist insbesondere hochpräzise, Mikrometer genaue und gleichzeitig Megahertz schnelle Distanzmessung nicht möglich.

Die erfinderische Vorrichtung soll die Signaldynamik einer Distanzmesseinheit mindestens um den Faktor 1000 mit einer Einstellgeschwindigkeit von schneller als 500 ns bewerkstelligen. Im Gegensatz dazu haben all die vorgeschlagenen Lösungen den Nachteil, dass die Signalamplitudeneinstellung (Abschwächung, Verstärkung) entweder zu langsam ist oder einen zu kleinen Dynamikbereich aufweist.

Es ist deshalb eine Aufgabe der Erfindung ein Vermessungsgerät mit einem verbesserten Laserdistanzmessmodul bereitzustellen, welches eine Distanzmessung von besser als 500 Mikrometer mit einer erhöhten Laserscanrate ermöglicht, insbesondere eine Rate von 100 kHz bis mehrere MHz, insbesondere für ein reflektorlos messendes Vermessungsgerät.

Eine spezielle Aufgabe der Erfindung besteht darin, ein Vermessungsgerät mit einem verbesserten Laserdistanzmessmodul bereitzustellen, mit einem erweiterten Einsatzbereich hinsichtlich Amplitudendynamik und einer stabilen Messrate (Scanrate) ohne Unterbrüche durch unter- oder übersteuerte Signalamplituden.

Eine andere Aufgabe der Erfindung besteht darin, ein Vermessungsgerät mit einem hinsichtlich Robustheit und Kalibrierbarkeit verbesserten Laserdistanzmodul bereitzustellen, insbesondere ein verbessertes Laserdistanzmodul welches innerhalb einem grossen Temperaturbereich eingesetzt werden kann.

Diese Aufgaben werden durch die Verwirklichung der kennzeichnenden Merkmale des unabhängigen Anspruchs gelöst. Merkmale, die die Erfindung in alternativer oder vorteilhafter Weise weiterbilden, sind den abhängigen Patentansprüchen zu entnehmen.

Die Erfindung bezieht sich auf ein Vermessungsgerät, insbesondere Tachymeter, Laserscanner, Profiler oder Lasertracker, zum Scannen von unkooperativen Objekten, insbesondere natürliche Objekte, zudem auch zum Scannen von kooperativen Objekten wie Reflektoren, mit einem elektronischen Laserdistanzmessmodul, das einen optischen Sendekanal mit einer Sendeeinheit zur Erzeugung einer Lasermessstrahlung und einen optischen Empfangskanal mit einer Empfangseinheit für reflektierte Lasermessstrahlung umfasst. Die Strahlführung im elektronischen Laserdistanzmessmodul ist vermittels einer Faseroptik ausgebildet, insbesondere bestehend aus Monomodefasern; und der optische Sendekanal des Laserdistanzmessmoduls enthält eine Abschwächeinheit für eine Abschwächung der von der Sendeeinheit erzeugten Lasermessstrahlung, wobei die Abschwächeinheit derart ausgebildet ist, dass eine elektrisch steuerbare Einstellung von mindestens zwei unterschiedlichen Abschwächfaktoren bereitgestellt wird und die Abschwächeinheit einen funktionalen Bezug zwischen Abschwächfaktor und elektrischer Ansteuerung aufweist, insbesondere wobei der funktionale Bezug über einen Temperaturbereich zwischen -20°C und 50°C bekannt ist, insbesondere zwischen -40°C und 70°C.

In einer speziellen Ausführungsform der Erfindung wird während des Scannens eine Einstellung der Abschwächeinheit mit unterschiedlichen Abschwächfaktoren mit einer Abschwächeinstellrate durchgeführt, welche mindestens gleich hoch ist wie eine Referenzmessrate des Laserdistanzmessmoduls basierend auf einer hypothetisch erreichbaren Distanzmessrate des Laserdistanzmessmoduls für eine Laserdistanzmessung mit einer hypothetischen Amplitude im linearen Aussteuerbereich der Empfangseinheit; insbesondere wobei die Sendeeinheit während des Scannens fortwährend modulierte, insbesondere gepulste, Sendesignale mit einer Modulationsrate höher als 100 kHz erzeugt, insbesondere mehrere MHz bis GHz, und wobei die Abschwächeinheit laufend von Sendesignal zu Sendesignal ansteuerbar ist.

In einer weiteren Ausführungsform erfolgt die Einstellung der Abschwächeinheit während des Scannens derart, dass der Empfangseinheit ein reflektiertes Empfangssignal mit einer Amplitude im linearen Aussteuerbereich der Empfangseinheit geliefert wird, basierend auf einem einzigen vorgängigen Empfangssignalpuls oder einer Folge von vorgängigen Empfangssignalpulsen; insbesondere wobei die Abschwächeinstellrate derart angepasst ist, dass das reflektierte Empfangssignal mit einer Messeinstellrate für eine Einstellung des reflektierten Empfangssignals mit einer Amplitude im linearen Aussteuerbereich der Empfangseinheit geliefert wird, so dass eine Distanzmessrate erzielt wird, welche mindestens gleich hoch ist wie die Referenzmessrate; beispielsweise wobei das reflektierte Empfangssignal bezogen auf einen einzigen unmittelbar vorhergehenden Empfangssignalpuls oder bezogen auf mehrere aufeinanderfolgende unmittelbar vorhergehende Empfangssignalpulse angepasst wird.

Beispielsweise emittiert die Sendeeinheit periodisch Signale mit einem Abstand von 1000 ns. Signale können Einzelpulse oder Pulse mit Kodierungsmuster sein, im einfachsten Fall eine Burstimpulsfolge bestehend aus N Pulsen im Abstand von beispielsweise 5 ns. Typischerweise besteht ein Distanzmesspunkt aus 1 bis 10'000 Empfangspulsen.

Beim Scannen eines Objekts wird dauernd gesendet und empfangen; wobei beispielsweise die erfinderische Abschwächeinheit laufend von Signal zu Signal angesteuert und gegebenenfalls nachgestellt wird, sodass der Empfangseinheit ein Empfangssignal mit einer Amplitude im kalibrierten Aussteuerbereich geliefert wird. Die Steuerung der Abschwächeinheit erfolgt jeweils immer durch die Analyse eines vorhergehenden Sendesignals, im Speziellen eines einzigen vorhergehenden Signalpulses. Falls für die Distanzmessung mehrere Sendesignale (z.B. 100 Sendepulse) genommen werden, dann bleiben noch genügend optimal konditionierte Signale (z.B. 99 Sendepulse) für die Distanzmessung zur Verfügung, über welche beispielsweise gemittelt werden kann. Die Distanzmessvorrichtung kann durchwegs so ausgelegt werden, dass es immer ein erstes Sendesignal für die Signaleinstellung gibt und wenigstens ein nachfolgendes Sendesignal für die optimale Bestimmung der Distanz. Falls also zwei oder mehrere Lasersignale zu einem Messergebnis akkumuliert werden, dann ist diese Methode typischerweise völlig ausreichend.

Bekannt sind diverse Distanzmessmethoden wie Schwellwertmethode, Phasendifferenzverfahren oder hochfrequente Signaldirektabtastung (Waveform-Digitizing, WFD). Diese verschiedenen technologischen Methoden für Distanzmessung unterscheiden sich zwar auch senderseitig, jedoch liegt der wesentliche Unterschied bei der Empfangs- und Auswerteeinheit.

Senderseitig ist beispielsweise zu entscheiden ob und wie die Signale kodiert werden und welche Anforderungen für das Vermessungsgerät mit höchstem Erfüllungsgrad zu erreichen sind. Empfangsseitig hingegen sind die Unterschiede der Distanzmessmethoden ausgeprägter. Eine Phasenmesseinrichtung transformiert bereits kurz nach dem Photodetektor die GHz-Frequenzen in einen tieferen Frequenzbereich und digitalisiert mit einem langsamen Analog-Digital-Wandler die Distanzmesssignale, um diese dann einer Auswerteeinheit zuzuführen. Bei einer Distanzmesseinheit nach der Direktabtastmethode wird hingegen das hochfrequente Signal direkt einem Filterblock zugeführt und mit einem möglichst schnellen AD-Wandler abgetastet. Die entsprechend hohe Rate der digitalisierten Signalwerte wird beispielsweise einem FPGA zugeführt der die Signalprozessierung wie Signalsuche, Dekodierung und Distanzbestimmung durchführt. Eine Distanzmesseinheit nach der Schwellwertmethode zeichnet sich aus durch eine oft noch höhere Bandbreite des Empfangssignals als die vorhergehenden beiden Methoden und detektiert das Distanzmesssignal mittels eines Schwellwert-Diskriminators, welcher Trigger-Ereignisse auf die Pikosekunde genau an eine Zeitmessvorrichtung weiterleitet. Letztere umfasst in der Regel einen Zähler und eine Zeitinterpolationsvorrichtung (Time-to-Digital Converter, TDC).

Da sich die verschiedenen Distanzmessmethoden senderseitig vergleichsweise recht wenig unterscheiden, ist eine erfinderische Vorrichtung zur Signalsteuerung und Amplitudenanpassung im Sendekanal des Laserdistanzmessmoduls sehr vorteilhaft.

Ein spezieller Vorteil der Erfindung besteht insbesondere darin, dass die Signalsteuerung senderseitig angebracht ist. Der Sendestrahl ist in der Regel räumlich beugungsbegrenzt, das heisst wellenoptisch monomodig und dadurch für die Lichtführung in Singlemodefasern geeignet. Dank der Monomodigkeit können neben geometrisch-optischen Abschwächprinzipien auch interferometrische Abschwächprinzipien eingesetzt werden. Senderseitig ist oft auch die Polarisation definiert, was die Komplexität einer entsprechenden senderseitigen Abschwächeinheit deutlich reduziert.

Ein wesentlicher Vorteil der Erfindung besteht darin, dass das Sendelicht in Monomodefasern geführt werden kann. Aus dem entfernten technischen Gebiet der Telekommunikation sind diverse Abschwächeinheiten mit Nanosekunden Schaltzeiten bekannt und es ist deshalb ebenfalls ein Teil der Erfindung, dass mittels geeigneten technischen Anpassungen diese faseroptischen Komponenten für Distanzmessung eingesetzt werden können.

In einer weiteren Ausführungsform ist die Abschwächeinheit derart ausgebildet, dass sie betrieben wird mit einer Abschwächeinstellrate definiert durch eine Einstellzeit zwischen zwei aufeinander folgenden Abschwächfaktoren von weniger als 1000 ns, insbesondere weniger als 300 ns, und einem einstellbaren Verhältnis zwischen einem minimalem und einem maximalem Abschwächfaktor von einem Faktor von 10³ oder mehr, insbesondere 10⁴.

In einer speziellen Ausführungsform ist das Laserdistanzmessmodul derart ausgebildet, dass im Sendekanal die Strahlführung der Lasermessstrahlung auf eine aberrationsfreie und/oder beugungsbegrenzte Weise erfolgt, insbesondere wobei die Abschwächeinheit auf einem interferometrischen Abschwächprinzip basiert. Dies ermöglicht beispielsweise den Bau einer sehr kompakten elektro-optischen Abschwächeinheit basierend auf planarer Lichtleitertechnologie, beispielsweise mittels Mach-Zehnder Interferometerzellen und/oder elektro-optischer Richtungskoppler.

Eine weitere Ausführungsform der Erfindung ist dadurch gekennzeichnet, dass die Abschwächeinheit derart ausgebildet ist, dass die Abschwächung vermittels eines optisch aktiven Kristalls erfolgt; insbesondere basierend auf einem Effekt aus mindestens einer der Gruppen der elektro-optischen Effekte, der akusto-optischen Effekte und der magneto-optischen Effekte; insbesondere wobei die Abschwächeinheit derart ausgebildet ist, dass ein Hysterese-Effekt im optisch aktiven Kristall automatisch, insbesondere fortlaufend, kalibriert wird.

Optische Kristalle haben die Fähigkeit, die Schwingungsebene von linear polarisiertem Licht beim Durchgang durch den Kristall zu drehen. Die Ursache dieses optischen Drehvermögens beruht bei festen Stoffen in einer schraubenförmigen Kristallstruktur, bei Flüssigkeiten, wie den Flüssigkristallen, in einer Schraubenstruktur der Moleküle selbst. Das Drehvermögen ist von der Dicke der durchlaufenen Schicht, der Wellenlänge des Lichtes und der Temperatur abhängig. Grundsätzlich sind linksdrehende und rechtsdrehende Kristalle zu unterscheiden. Optisch nicht aktive Kristalle können durch Anlegen eines äußeren Magnetfeldes optisch aktiv werden (z.B. magneto-optischer Kerr-Effekt, Faraday-Effekt).

Verglichen mit Flüssigkristallen sind (feste) optische Kristalle hinsichtlich Umgebungseinflüssen, insbesondere Temperatureinflüsse, um einiges robuster und können beispielsweise ohne faktische Funktionseinbusse über einen grossen Temperaturbereich, beispielsweise zwischen -20°C und 50°C, betrieben werden ohne dass dadurch ihre optischen Eigenschaften stark variieren. Zudem ist die Schaltgeschwindigkeit in optischen Kristallen um mehrere Grössenordnungen schneller als in Flüssigkristallen. Mit Festkörperkristallen lassen sich Einstellgeschwindigkeiten von weniger als 1000 ns erreichen, was mit Flüssigkristallen nicht erreichbar ist.

Alternativ zur Verwendung von optisch aktiven Kristallen, insbesondere ebenfalls vergleichsweise robust hinsichtlich äusseren Einflüssen, ist in einer weiteren speziellen Ausführungsform der Erfindung die Abschwächeinheit derart ausgebildet, dass die Abschwächung auf einem opto-elektro-mechanischen Mikrosystem, nachfolgend MOEMS genannt, basiert.

Als problematisch erweist sich oft die von der eingestellten Abschwächung abhängige Transitzeit, welche sich direkt auf die Distanzmessung auswirkt und einen entsprechenden Distanzfehler einführt. Je stärker die Abschwächung umso länger wird typischerweise die effektive Transitzeit der Lasermessstrahlung durch die Abschwächeinheit, welche beispielsweise im Vergleich zum offenen Zustand bis gegen 10 ps zunehmen kann. Je nach Bauweise der Abschwächeinheit, wird mit zunehmendem Abschwächungsfaktor beispielsweise zunehmend parasitäres Licht erzeugt, welches zum Beispiel über Mehrfachreflexionen einen Teil des Lichtpulses nach einer zeitlichen Verzögerung in den Ausgangsport koppelt. Teilweise kann dieser Effekt durch entsprechende Fixabschwächelemente und Absorberelemente minimiert werden. Dank der schnellen und eindeutig kalibrierbaren Schaltzeiten von optisch aktiven Kristallen und/oder MOEMS-Elementen, kann die Transitzeit zudem auch als Funktion der Abschwächung vorkalibriert werden.

In einer speziellen Ausführungsform der Erfindung sind das Laserdistanzmessmodul und die Abschwächeinheit deshalb derart ausgebildet, dass ein Distanzfehler, insbesondere basierend auf einer variablen Transitzeit, als Funktion des Abschwächfaktors automatisch, insbesondere fortlaufend, korrigiert wird.

Eine weitere Ausführungsform beschreibt eine Abschwächeinheit, welche polarisationsfrei ausgebildet ist.

Eine besonders vorteilhafte Ausführungsform basierend auf dem elektro-optischen Effekt bezieht sich auf ein Vermessungsgerät, bei dem die Abschwächeinheit derart ausgebildet ist, dass sie mindestens einen ersten polarisierenden Strahlteiler zur Erzeugung eines ersten und eines zweiten Teilstrahls mit jeweils unterschiedlicher Polarisation umfasst, insbesondere einen polarisierenden Parallel-Strahlteiler oder eine Savart-Platte; sowie einen optisch aktiven Kristall um vermittels elektro-optischem Effekt die Polarisation von mindestens dem ersten Teilstrahl zu verändern, insbesondere wobei der optisch aktive Kristall ein optisch nichtlinearer Kristall und/oder ein phasenschiebender Kristall sei; und einen zweiten polarisierenden Strahlteiler um die beiden Teilstrahlen wieder zusammenzuführen, insbesondere einen polarisierenden Parallel-Strahlteiler oder eine Savart-Platte.

Elektro-optische, variable Abschwächeinheiten haben gegenüber elektro-mechanisch angesteuerten Elementen den Vorteil von sehr kurzen Schaltzeiten (bis einige Nanosekunden). Die Signalamplitude wird eingestellt mittels der richtigen Wahl der optischen Transmission oder optischen Dichte vermittels eines elektronisch ansteuerbaren optischen Elements. Als elektronisch ansteuerbare optische Elemente eignen sich optisch nichtlineare doppelbrechende Kristalle und phasenschiebende Kristalle.

Eine weitere vorteilhafte Ausführungsform der Erfindung beschreibt ein Vermessungsgerät wobei die Abschwächeinheit derart ausgebildet ist, dass sie mindestens umfasst: einen ersten polarisierenden Strahlteiler zur Erzeugung eines ersten und eines zweiten Teilstrahls mit jeweils unterschiedlicher Polarisation, insbesondere einen polarisierenden Parallel-Strahlteiler oder eine Savart-Platte; eine erste und eine zweite Mach-Zehnder Interferometer-Zelle im ersten und zweiten Teilstrahl, wobei vermittels einer Veränderung der optischen Phase innerhalb der ersten Mach-Zehnder Interferometer-Zelle und/oder einer Veränderung der optischen Phase innerhalb der zweiten Mach-Zehnder Interferometer-Zelle eine Intensitätsänderung des ersten und zweiten Teilstrahls erzeugt wird; und einen zweiten polarisierenden Strahlteiler um die beiden Teilstrahlen wieder zusammenzuführen, insbesondere einen polarisierenden Parallel-Strahlteiler oder eine Savart-Platte; wobei ein Laufzeitunterschied zwischen dem ersten und dem zweiten Teilstrahl kleiner als 1 Pikosekunde gewährleistet wird.

In einer weiteren Ausführungsform wird anstelle einer Mach-Zehnder Interferometer-Zelle ein elektro-optischer Richtungskoppler verwendet, d.h. die Abschwächeinheit ist derart ausgebildet, dass sie mindestens umfasst: einen ersten polarisierenden Strahlteiler zur Erzeugung eines ersten und eines zweiten Teilstrahls mit jeweils unterschiedlicher Polarisation, insbesondere einen polarisierenden Parallel-Strahlteiler oder eine Savart-Platte; einen ersten und einen zweiten elektro-optischen Richtungskoppler im ersten und zweiten Teilstrahl, wobei vermittels einer Veränderung der optischen Transmission des ersten elektro-optischen Richtungskopplers und/oder einer Veränderung der optischen Transmission des zweiten elektro-optischen Richtungskopplers eine Intensitätsänderung des ersten und/oder des zweiten Teilstrahls erzeugt wird; und einen zweiten polarisierenden Strahlteiler um die beiden Teilstrahlen wieder zusammenzuführen, insbesondere einen polarisierenden Parallel-Strahlteiler oder eine Savart-Platte; wobei ein Laufzeitunterschied zwischen dem ersten und dem zweiten Teilstrahl kleiner als 1 Pikosekunde gewährleistet wird.

Eine weitere spezielle Ausführungsform basiert auf dem akusto-optischen Effekt und beschreibt ein Vermessungsgerät wobei die Abschwächeinheit derart ausgebildet ist, dass sie mindestens einen akusto-optisch aktiven Kristall umfasst, um vermittels akusto-optischem Beugungseffekt als Funktion einer angelegten Ansteuerspannung und einer Beugungsordnung eine Intensitätsänderung zwischen dem einfallenden Lasermessstrahl und eines durch Beugung abgelenkten Teilstrahls zu erzeugen; sowie eine Kontrolleinheit um die Temperaturabhängigkeit eines Beugungswinkels mittels Nachführung einer die akustische Welle erzeugenden Hochfrequenz zu kompensieren; insbesondere wobei für die Abschwächung der abgelenkte Strahl der ersten Beugungsordnung verwendet wird.

Wegen limitierter Beugungseffizienz ist der erreichbare Bereich der einstellbaren Strahlungsintensität am Ausgang der ersten Beugungsordnung erheblich umfangreicher als derjenige bei der 0. Ordnung. Vorzugsweise wird deshalb dieser Kanal für die Abschwächfunktion verwendet und im durchgehenden Kanal (Strahl 0. Ordnung) befindet sich typischerweise ein Lichtabsorber-Element.

Als Faraday-Effekt bezeichnet man die Drehung der Polarisationsrichtung einer elektromagnetischen Welle in einem dielektrischen Medium unter Einfluss eines magnetischen Feldes. Optische Elemente, die den Faraday-Effekt zur Änderung der Polarisationsrichtung von Licht nutzen, werden als Faraday-Rotatoren bezeichnet.

Eine weitere vorteilhafte Ausführungsform bezieht sich auf ein Vermessungsgerät basierend auf dem magneto-optischen Faraday-Effekt, worin die Abschwächeinheit derart ausgebildet ist, dass sie mindestens umfasst: einen ersten polarisierenden Strahlteiler zur Erzeugung eines ersten und eines zweiten Teilstrahls mit jeweils unterschiedlicher Polarisation; einen magneto-optisch aktiven Kristall um vermittels magneto-optischem Faraday-Effekt, als Funktion eines eingestellten magnetischen Feldes, eine räumliche Drehung eines Polarisationsvektors von mindestens dem ersten Teilstrahl zu erzeugen; und einen zweiten polarisierenden Strahlteiler um ein Ausgangssignal basierend auf mindestens dem veränderten ersten Teilstrahl zu erzeugen; insbesondere wobei die Abschwächeinheit weiter mindestens ein Element der folgenden Gruppen umfasst: einen optisch aktiven Kristall, insbesondere ein Kristall welcher eine Polarisationsebene um 45 Grad dreht; und ein Absorberelement um internes Streulicht zu reduzieren, insbesondere um Licht welches nicht zum Ausgangssignal beiträgt zu reduzieren; wobei ein Laufzeitunterschied zwischen dem ersten und dem zweiten Teilstrahl kleiner als 1 Pikosekunde gewährleistet wird.

Typische Faraday-Rotatoren sind beispielsweise optisch transparente dielektrische Festkörper (wie kristalliner Quarz oder terbiumhaltige Gläser) die in einem homogenem Magnetfeld eine materialspezifische Drehung (Verdet-Konstante) der Polarisationsebene des Lichtes erzeugen. Das für diese Anwendung neue Material Terbiumtitanat zeigt zum Beispiel eine hohe Transparenz für Licht vom sichtbaren bis in den IR-Bereich und eine höhere Verdet-Konstante als die zur Zeit verwendeten Materialien, wie z.B. TGG oder terbiumhaltige Gläser. Terbiumtitanat hat die chemische Formel Tb₂Ti₂O₇ und kann mit Kristallzüchtungsverfahren aus Schmelzen mit einer Zusammensetzung nahe oder gleich der stöchiometrischen Zusammensetzung oder auch mit keramischen Verfahren hergestellt werden.

In einer weiteren Ausführungsform ist die Abschwächeinheit derart ausgebildet, dass sie ein opto-elektro-mechanisches Mikrosystem umfasst, nachfolgend MOEMS genannt, welches mindestens umfasst: einen Eingangskanal für die Lasermessstrahlung, eine Linse, einen drehbaren Spiegel und Mittel zur Einstellung von unterschiedlichen Winkelstellungen des Spiegels und einen als optische Faser ausgebildeten Ausgangskanal für die am rotierenden Spiegel reflektierte Lasermessstrahlung; wobei vermittels der Linse und einer Reflexion am rotierenden Spiegel ein Lichtfleck erzeugt wird, welcher durch die Rotation des Spiegels und einer eingestellten Winkelstellung des Spiegels über einen Faserkern einer Faser des Ausgangskanals gesteuert wird, wodurch eine unterschiedliche Lichtleistung der einfallenden Lasermessstrahlung in die Faser eingekoppelt wird. Bei der Verwendung von MOEMS-Elementen ist beispielsweise der niedrige elektrische Leistungsverbrauch sehr vorteilhaft, womit praktisch kein temperaturinduzierter Drift durch Eigenaufwärmung existiert. Allerdings sind die Schaltzeiten bisher etwas langsamer als bei der Verwendung von optisch aktiven Kristallen. Bei der erfinderischen Vorrichtung wird die Schaltgeschwindigkeit erhöht durch einen im Vergleich zu herkömmlichen Elementen mindestens um eine Grössenordnung verlängerten Brennweite der Optik vor dem Ausgangskanal, dadurch wird die Schaltzeit im gleichen Ausmasse verkürzt.

In einer speziellen Ausführungsform umfasst das erfindungsgemässe Vermessungsgerät ferner mindestens ein Element der folgenden Gruppen: eine Kalibrationseinheit zur Kalibration einer Transitzeit als Funktion des eingestellten Abschwächfaktors; eine Fixabschwächeinheit zur Reduktion von Mehrfachreflexionen; eine Faser mit abgewinkeltem Faserende, insbesondere mit einem Winkel von 8 Grad, zur Reduktion von Mehrfachreflexionen; ein Absorberelement zur Löschung des abgelenkten Lichts und zur Erzeugung einer konstanten Transitzeit unabhängig vom eingestellten Abschwächfaktor; und ein einem optisch aktiven Kristall vorgeschalteter Zirkulator zum Abfangen von Rückreflexionen.

Das erfindungsgemässe Vermessungsgerät zum Scannen von unkooperativen Objekten, insbesondere natürliche Objekte, zudem auch zum Scannen von kooperativen Objekten wie Reflektoren, mit einem elektronischen Laserdistanzmessmodul, wird nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1a-d:: beispielhafte Vermessungsgeräte mit einem Laserdistanzmessmodul, z.B. Lasertracker für reflektorlose Messungen (a), Theodolit mit und ohne Reflektor (b), LIDAR Scanner (c) und ein 3D-Laserscanner zur Erstellung eines 3D-Modells eines Raumes(d);
- Fig. 2:: Winkelabhängige Streucharakteristik von typischen Zielobjekten;
- Fig. 3:: Blockschema eines erfindungsgemässen Laserdistanzmessmoduls;
- Fig. 4:: Blockschema eines erfindungsgemässen Laserdistanzmessmoduls nach dem WFD-Prinzip;
- Fig. 5:: beispielhafte Ausführungsform einer erfindungsgemässen Abschwächeinheit nach dem elektro-optischen Prinzip;
- Fig. 6:: beispielhafte Ausführungsform einer polarisationsfreien erfindungsgemässen Abschwächeinheit nach dem elektro-optischen Prinzip mit einem Mach-Zehnder Interferometer;
- Fig. 7:: beispielhafte Ausführungsform einer erfindungsgemässen Abschwächeinheit nach dem akusto-optischen Prinzip;
- Fig. 8:: beispielhafte Ausführungsform einer erfindungsgemässen Abschwächeinheit nach dem magneto-optischen (Faraday) Prinzip;
- Fig. 9:: beispielhafte Ausführungsform einer erfindungsgemässen Abschwächeinheit basierend auf MOEMS Technologie.

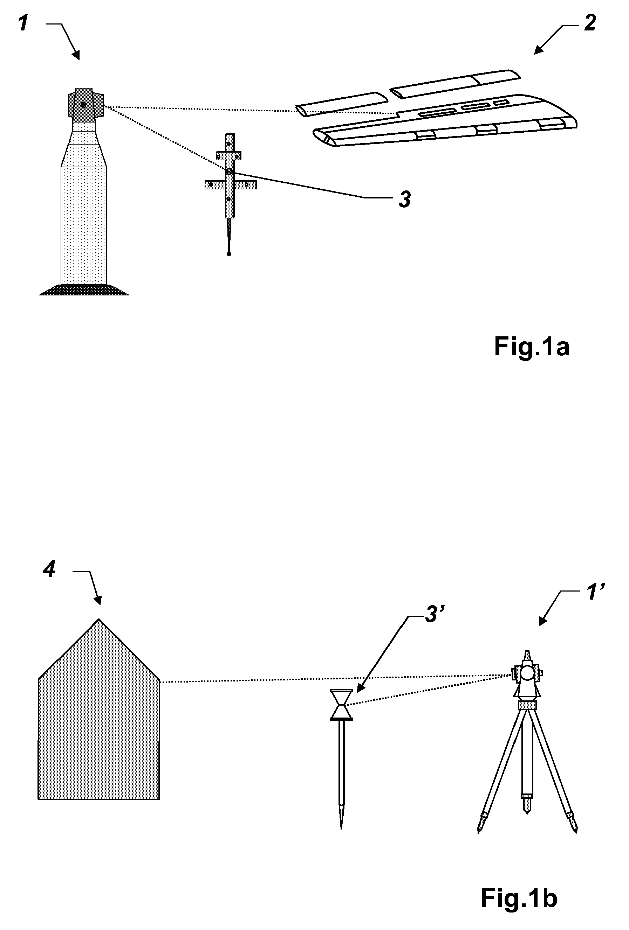

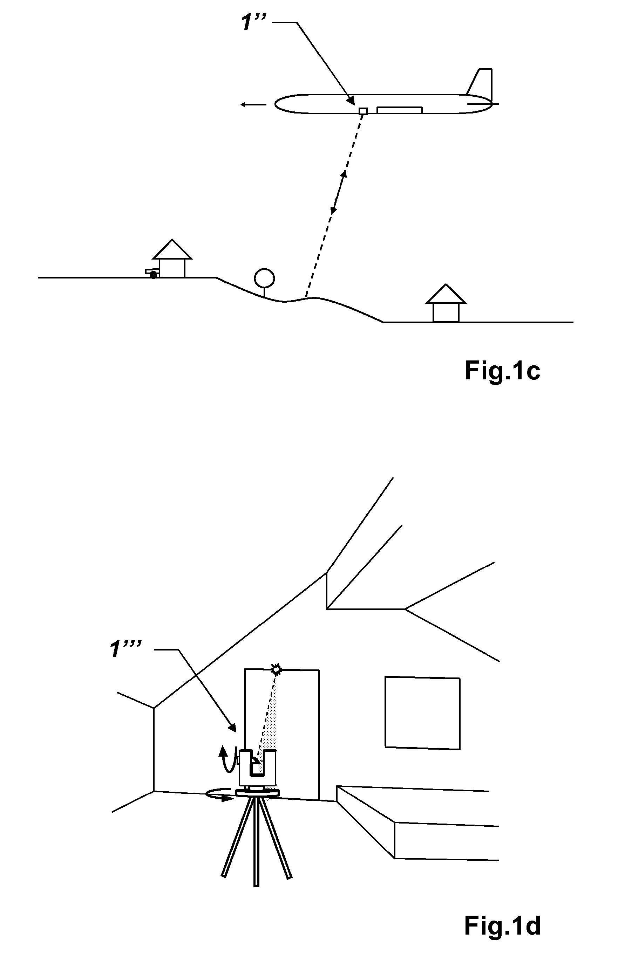

**Figur 1** zeigt beispielhafte Vermessungsgeräte mit einem Laserdistanzmessmodul. Im Fokus der Erfindung stehen moderne Lasertracker 1 wie in **Figur 1a** dargestellt, welche mit einem scannenden Laserstrahl Oberflächen von hergestellten Gegenständen 2 und natürlichen Objekten abtasten und deren räumliche Dimensionen in Form von Koordinaten bestimmen. Oft wird hierbei auch vermittels eines reflektierenden Ziels gemessen, beispielsweise vermittels einer am vermessenden Objekt angebrachten Vermessungsprobe mit einem Reflektor 3 für ein Tracking mit dem Laserdistanzmessmodul des Vermessungsgerätes 1, wobei an der Vermessungsprobe zusätzliche Signalkomponenten zur 6DoF Bestimmung der Lage des zu vermessenden Objektes angebracht sind, welche beispielsweise mittels einer 6DoF Kamera des Vermessungsgerätes erfasst werden. Seit ein paar Jahren sind auch Theodolite 1' im Markt, wie in **Figur 1b** dargestellt, die wie Scanner eine reflektorlose Distanzmessung, beispielsweise auf ein natürliches

Objekt 4, mit einer Geschwindigkeit im kHz Bereich erfassen können. Oft wird mit geodätischen Totalstationen oder Theodoliten vermittels speziellen Reflektionszielen 3' vermessen, insbesondere Reflektionsprismas, doch auch bei Theodoliten besteht immer mehr der Bedarf natürliche Objekte 4 mit teilweise glatten und damit spiegelnden Oberflächen zu vermessen. Dies stellt die Messtechnik vor eine besondere Herausforderung, nämlich dass das Messsignal je nach Ausrichtung des Instruments zur Oberfläche in der Stärke massiv schwankt. Der am Objekt teilweise gespiegelte Messstrahl trifft entweder die Empfangsoptik oder verfehlt sie. Dies kann zu Signalunterschieden von mehr als einen Faktor 100 (20dB) führen. Zudem können die Oberflächen auch hell oder dunkel sein, was zusätzlich eine Signalvariation von typischerweise einem Faktor 30 (15dB) erzeugt. Glanz, Reflexionsvermögen und wechselnde Distanz verlangen vom Messinstrument eine Signaldynamik von mehr als 300'000 (55dB), was mit bisherigen Mitteln und Messgeräten nicht erreichbar ist. In besonderem Masse trifft dies beispielsweise auch auf Anwendungen im LIDAR Bereich zu, wie in **Figur 1c** dargestellt, wobei durch einen LIDAR scanner 1" in rascher Abfolge sehr unterschiedliche Oberflächen gescannt werden, beispielsweise hoch reflektive Wasserflächen gegenüber diffus streuender Vegetation.

Die Bewältigung der hohen Dynamik ist mit einer für die jeweiligen Scanner kompatiblen hohen Messgeschwindigkeit bereit zu stellen. Gegenstände aus Metall oder Kunststoff, aber auch lackierte Oberflächen sind fast durchwegs leicht bis stark glänzend. Laserlicht wird daher hauptsächlich in die zum Einfallswinkel gespiegelte Richtung abgelenkt. Dies bewirkt, dass der Lichtanteil für diffuse Reflexion klein ist und daher sehr wenig Licht zum Messgerät zurück reflektiert wird. Trifft der Laserstrahl hingegen fast senkrecht auf die Oberfläche, dann passiert das Gegenteil und fast alles Licht trifft den Empfänger. Zum Beispiel auch im Gebiet von Indoor-Vermessungen, beispielsweise zur Erzeugung eines 3D-Modells eines Raumes mit einem 3D-Laserscanner 1'" wie in **Figur 1d** dargestellt, oder im Bereich der Industrievermessung zur Kontrolle von künstlich gefertigten Bauteilen, wechseln sich diese extremen Strahlausrichtungen in rascher Folge ab, insbesondere beim Scannen von Rohren, Kanten, oder Bohrungen in einer Platte. Um eine möglichst lückenlose Messung von solchen Oberflächen zu erzielen, braucht es ebenfalls ein Distanzmessmodul mit ausrechend hoher Dynamik, wobei das Abscannen in gewohnt rascher Geschwindigkeit erfolgen soll, weshalb das Sendesignal entsprechend schnell einstellbar sein muss.

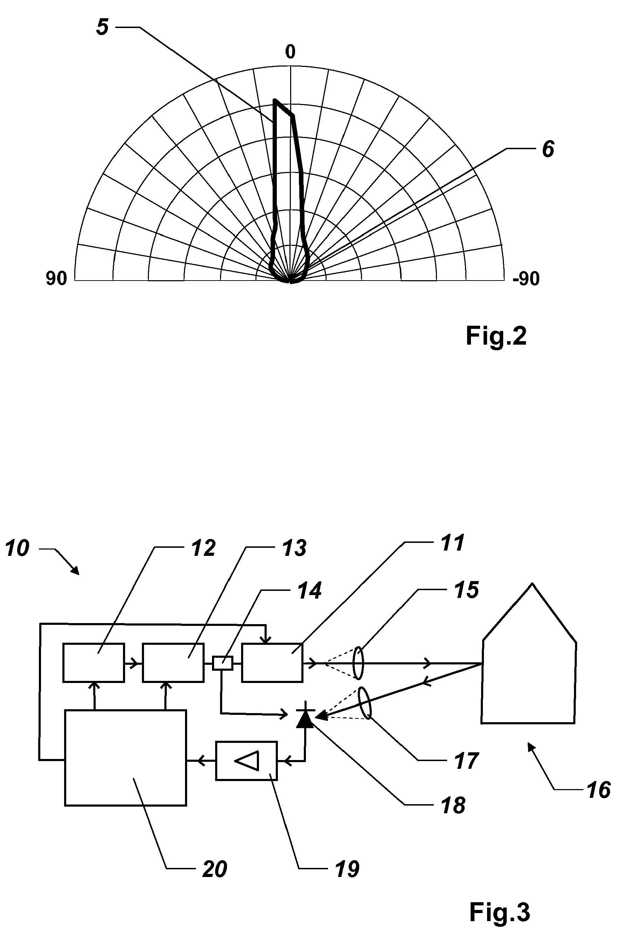

**Figur 2** zeigt eine typische Streucharakteristik von einer Platte aus schwarzem Kunststoff. Die Kurve 5 stellt das Reflexionsvermögen in Funktion des Streuwinkels (Indikatrix) für den Fall eines fast senkrecht einfallenden Laserstrahls dar. In der Figur ist das Reflexionsvermögen umso grösser, je weiter die Kurve 5 in radialer Richtung vom Zentrum 6 entfernt ist. Der Streuwinkel ist in der Figur in azimutaler Richtung gezeichnet, von 90 Grad links in der Figur im Uhrzeigersinn auf 0 Grad (oben in der Figur) und auf minus 90 Grad (rechts in der Figur). Oft sind es nicht weisse sondern dunkle Oberflächen, die spiegelnde Wirkung zeigen. Im gezeigten Beispiel beträgt das integrierte Reflexionsvermögen lediglich etwa 3.5%. Zudem sinkt die Signalstärke bei Einfallswinkeln grösser als 45 Grad auf unter 10% gegenüber der spiegelnden Richtung (hier etwa 3 Grad). In diesem beispielhaften Fall beträgt die maximale rückreflektierte Leistung unter dem Glanzwinkel (3 Grad) 150% relativ zu einer diffusen weissen Fläche und sinkt mit zunehmendem Messwinkel rasch ab. Bei 70 Grad ist das Signal ca 20x kleiner und beträgt nur noch etwa 7%. Das Empfangssignal kann dabei von Messpunkt zu Messpunkt mindestens in dieser Grössenordnung ändern, was mit einer variablen Abschwächeinheit im Sendekanal des Laserdistanzmessmoduls angepasst werden soll. Die Abschwächeinheit weist elektrisch ansteuerbare Einstellungen aus, die entweder in diskreten Stufen oder in kontinuierlicher Form bereitgestellt werden.

**Figur 3** zeigt ein Blockschema eines erfindungsgemässen Laserdistanzmessmoduls 10 mit einer erfinderischen schnellen Abschwächeinheit 11 im Sendekanal. Der Sendekanal besteht hier aus einer Seed-Einheit 12, bestehend aus einer elektronischen Treiberstufe und einer Laserdiode oder einer superlumineszenten LED, einem optischen Verstärker 13, beispielsweise ein mit Erbium dotierter Faserverstärker, einem Strahlteiler 14 um einen Teil der erzeugten Strahlung als Referenzstrahlung für den Empfangskanal abzulenken, einer einstellbaren optischen Abschwächeinheit 11 gemäss der vorliegenden Erfindung und einer Austrittsoptik 15. Der ausgesendete Lasermessstrahl wird an einem Zielobjekt 16 reflektiert und im Empfangskanal des Distanzmessmoduls 10 detektiert. Der Empfangskanal besteht aus einer Eintrittsoptik 17, einer Photodiode 18 und einer Empfangselektronik, hier bestehend aus einem Verstärker 19 und einer Zeitmesseinheit 20.

Typische Messgeschwindigkeiten heutiger Scanner liegen bei 1 MHz Punktrate. Der optische Messstrahl wird typischerweise mittels einer Scanbewegung rasterförmig mit rascher Geschwindigkeit über die zu vermessende Oberfläche des Objekts bewegt. Dabei ändert sich die Stärke des empfangenen Signals von Messpunkt zu Messpunkt. Auch bei gleich bleibenden Abständen kann sich die Amplitude in einem Bereich eines Faktors 100'000 (50 dB) ändern, dies vor allem wegen lokalen Spiegelungen. Mit einer variablen Abschwächeinheit im Sendekanal kann bei Strahlspiegelungen an teilweise reflektierenden Oberflächen das Distanzmesssignal von Messpunkt zu Messpunkt für die Empfangseinheit optimal eingestellt werden.

Die Messgeschwindigkeiten von scannenden Lasertrackern sind wegen den höheren Messgenauigkeiten im Mikrometerbereich mit 1 bis 100 kHz etwas langsamer, die Laserschussrate hingegen eher höher im zweistelligen Megaherzbereich. Mittels einem VOA im Sendekanal kann auch hier eine Signalvariation bis zu einem Faktor 10'000 komprimiert werden, so dass auf der Empfangseinheit Signalvariationen von wesentlich weniger als 100 auftreten und dadurch eine höhere Messgenauigkeit erreicht wird.

Der Arbeitspunkt der Empfangselektronik kann beispielsweise derart ausgelegt sein, dass bei der Einstellung der Abschwächeinheit mit maximaler Transmission und Reflexion an einem schwarzen Objekt mit Albedo 10% der Empfangssignalpegel bei 75% des Aussteuerbereichs der Empfangselektronik eingestellt ist. Bei Verwendung einer variablen Abschwächeinheit mit einer Abschwächdynamik von einem Faktor 10'000 (40 dB) kann daher auf Objekte mit einer um einen Faktor 1000 höheren Reflektivität im Vergleich zu einer weissen Oberfläche noch eine genaue Distanzmessung erzielt werden. Auch Reflexionszielmarken und retroreflektierende Folien und Markierungen können so noch genau vermessen werden.

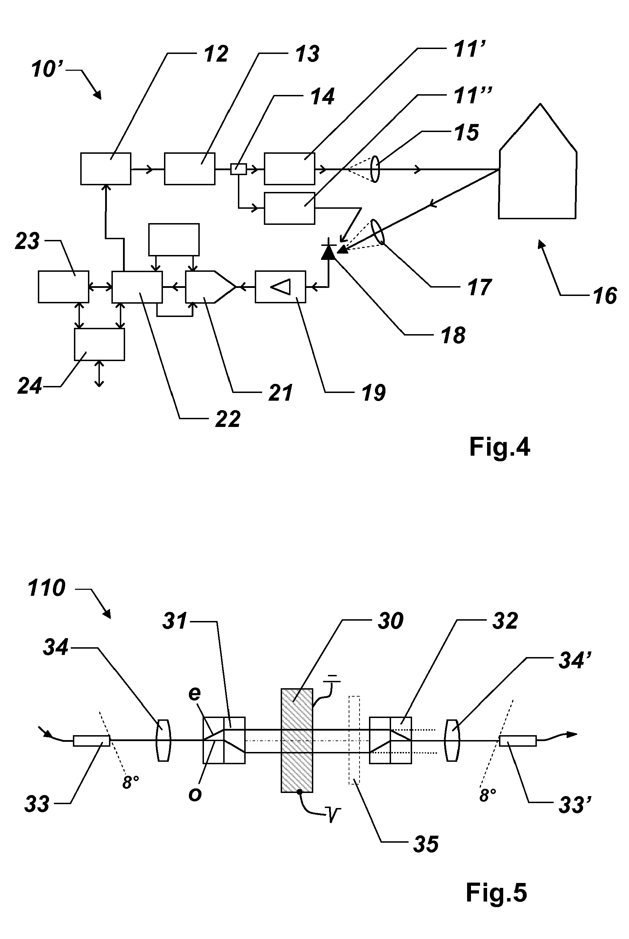

**Figur 4** zeigt ein Blockschema eines erfindungsgemässen Distanzmessmoduls 10' nach dem WFD-Prinzip ("Wave-Front-Digitizing"). Der Sendekanal besteht wiederum aus einer Seed-Einheit 12, einem optischen Verstärker 13, einem Strahlteiler 14, einer ersten einstellbaren optischen Abschwächeinheit 11' gemäss der vorliegenden Erfindung und einer Austrittsoptik 15. Zusätzlich ist neben der ersten einstellbaren optischen Abschwächeinheit 11' im Messkanal eine zweite einstellbare optische Abschwächeinheit 11" im internen Referenzkanal dargestellt. Die Abschwächeinheit im internen Referenzkanal 11" kann von langsamer Geschwindigkeit sein, da diese hauptsächlich zur optimalen Einstellung des Arbeitspunkts für das Startsignal und für eine allfällige Kalibrierung der Transitzeit der ersten Abschwächeinheit 11' in Funktion des Abschwächfaktors und/oder Temperatur gebraucht wird. Die Sendeeinheit kann hauptsächlich aus faseroptischen Komponenten bestehend aus Monomodefasern aufgebaut sein.

Das empfangene Messsignal wird über eine Eintrittsoptik 17 von einer Photodiode 18 detektiert, beispielsweise einer Avalanche Photodiode (APD), und nach einer rauscharmen Verstärker- und Filtereinheit 19 direkt einem Analog-Digital-Wandler 21 zugeführt. Die digitalen Signaldaten werden anschliessend zu einer FPGA-Einheit 22 weitergeleitet, welche die Bestimmung von Signalparametern wie Objektdistanz, Signalstärke, Signalrauschen, etc. durchführt, aber auch die Seed-Einheit 12 und die erfinderische Abschwächeinheit 11',11" steuert. Im gezeigten Beispiel wird das Signal ferner von der FPGA-Einheit 22 an eine Prozessoreinheit 23 und eine Schnittstelleneinheit 24 zur zusätzlichen Analyse und Auswertung weitergeleitet.

**Figur 5** zeigt eine beispielhafte Ausführungsform einer erfindungsgemässen Abschwächeinheit 110 nach dem elektro-optischen Prinzip, hier in Kombination mit einer Strahlführung innerhalb einer optischen Faser, vorzugsweise Monomodenfasern, mit zugehörigen Faseraustritts- und Fasereintrittskopplungen 33,33' mit entsprechender Kollimationsoptik 34,34'.

Elektro-optische, variable Abschwächeinheiten haben gegenüber elektro-mechanisch angesteuerten Elementen den Vorteil von sehr kurzen Schaltzeiten (bis einige Nanosekunden). Die Signalamplitude wird eingestellt mittels der richtigen Wahl der optischen Transmission oder optischen Dichte vermittels eines elektronisch ansteuerbaren optischen Elements. Als elektronisch ansteuerbare optische Elemente eignen sich optisch nichtlineare doppelbrechende Kristalle und phasenschiebende Kristalle 30. Polarisationsfreiheit wird erreicht durch die Trennung des Strahls in zwei (komplementäre) Polarisationsrichtungen ("e-Licht" und "o-Licht") mittels eines ersten polarisierenden Strahlteilers 31. Bekannte Strahlteiler sind beispielsweise polarisierende, Parallel-Strahlteiler (polarization beam displacer) oder die Savart-Platte. Beide Strahlengänge werden mittels eines elektrostatisch ansteuerbaren optisch-nichtlinearen Elements 30 verändert (Pockels- oder Kerr-Effekt), wobei ein Teil des e-Lichts zu o-Licht transformiert und umgekehrt. Verändertes Licht wird dann vermittels einem zweiten polarisierenden Strahlteiler 32 nicht mehr in die Faser eingekoppelt, was zu einer Strahlabschwächung führt.

Als problematisch erweist sich die von der eingestellten Abschwächung abhängige Transitzeit. Je stärker die Abschwächung umso länger wird die effektive Transitzeit, welche im Vergleich zum offenen Zustand bis gegen 10 ps zunehmen kann. Mit zunehmender Abschwächung wird das Licht von der Fasereintrittskopplung 33' weggelenkt, was aber zu parasitärem Licht mutieren kann, welches dann über Mehrfachreflexionen nach einer zeitlichen Verzögerung trotzdem partiell in die Faser einkoppelt. Als Gegenmassnahme wird beispielsweise die Transitzeit als Funktion der Abschwächung kalibriert. Mehrfachreflexionen können allenfalls mittels einem Fixabschwächer 35 und/oder mittels abgewinkelten Endflächen der Faserkopplungen 33,33' minimiert werden. Typischerweise werden die Faserenden der Faserkopplungen um etwa 8 Grad abgewinkelt. Mittels einem vorgeschalteten Zirkulatorelement können zudem Rückreflexionen abgefangen werden. Alternativ können Absorberelemente (nicht dargestellt) an den Stellen wo die weggelenkten Strahlen auftreffen platziert werden, dadurch kann eine konstante Transitzeit (<0.3 ps) unabhängig von der eingestellten Abschwächung erreicht werden.

Vorzugsweise sind die optischen Pfadlängen der beiden Strahlen e und o genau gleich lang, ansonsten könnten kleinste Asymmetrien der Abschwächung in den zugeordneten Lichtpfaden zu zusätzlichen Veränderungen der Transitzeit führen.

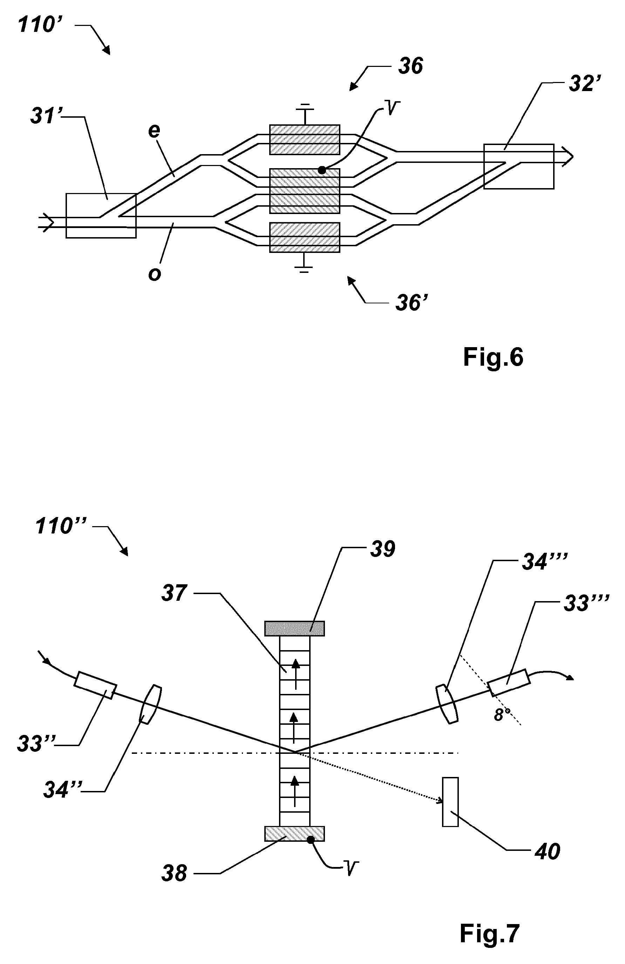

**Figur 6** zeigt eine erfindungsgemässe elektro-optische Abschwächeinheit 110', ausgebildet mit einem Mach-Zehnder Interferometer (MZI). Diese ebenfalls polarisationsfreie elektrooptische Abschwächeinheit ist in planarer Lichtleitertechnologie aufgebaut. Lichtein- und -ausgänge sind typischerweise glasfasergekoppelt. Das Eingangslicht wird mittels eines ersten Polarisationsteilers 31' wiederum in die zwei (komplementären) Polarisationskomponenten e und o aufgeteilt. Anschliessend folgen je ein Mach-Zehnder Interferometer 36,36', wodurch mittels einer Spannung die Leistung am Ausgang eingestellt werden kann. Bei einem integrierten Mach-Zehnder Interferometer wird durch Anlegen einer Spannung in einem der beiden Arme des Interferometers die optische Phase verändert, was am Interferenzpunkt der beiden Arme zu einer Intensitätsänderung führt. Anstelle von Mach-Zehnder Interferometer-Zellen 36,36' können auch elektrooptische Richtungskoppler (nicht dargestellt) eingesetzt werden. Anschliessend werden die veränderten e und o Komponenten mittels eines zweiten Polarisationsteilers 32' wieder zusammengeführt, wobei besonders wichtig ist, dass die Laufzeiten über die verschiedenen Lichtkanäle im Subpikosekunden-Bereich identisch sind.

**Figur 7** zeigt eine weitere Ausführungsform einer erfindungsgemässen Abschwächeinheit 110", hier ausgebildet mittels einem akusto-optischen Modulator mit faseroptischen Anschlüssen, d.h. mit zugehörigen Faseraustritts- und Fasereintrittskopplungen 33",33'" und entsprechender Kollimationsoptik 34",34"'. Herzstück dieser Abschwächeinheit ist ein akusto-optisch wirksamer Kristall 37 mit zwei Ausgängen. Hierbei wird im Kristall 37 mit Schallwellen ein optisches Gitter (Bragg-Gitter) erzeugt, woran ein einfallender Lichtstrahl gebeugt und gleichzeitig in seiner Frequenz verschoben wird. Zur Erzeugung der Schallwellen ist an einem Ende des Kristalls typischerweise ein Piezo-Element 38 angebracht. Am anderen Ende befindet sich typischerweise ein Schallabsorber-Element 39, um Reflexionen und stehende Wellen zu vermeiden oder zu minimieren. Am Ausgang ohne Ablenkung (Strahl 0. Ordnung) tritt das eingespeiste Licht aus, falls keine Ansteuerspannung angelegt wird und am Ausgang bei der ersten Beugungsordnung nimmt die Lichtleistung mit der Amplitude der Ansteuerspannung zu. Wegen limitierter Beugungseffizienz ist der erreichbare Bereich der einstellbaren Strahlungsintensität am Ausgang der ersten Beugungsordnung erheblich höher als derjenige bei der 0. Ordnung. Vorzugsweise wird deshalb dieser Kanal für die Abschwächfunktion verwendet und im durchgehenden Kanal (Strahl 0. Ordnung) befindet sich typischerweise ein Lichtabsorber-Element 40.

Um auch bei diesem Typ einer erfindungsgemässen Abschwächeinheit eine von der eingestellten Abschwächung unabhängige Transitzeit zu erreichen, ist eine Fasereinkopplung 33"' mit abgewinkelter Eintrittsfläche (typischerweise 8 Grad) vorteilhaft. Die Temperaturabhängigkeit des Beugungswinkels wird mittels Nachführung der die akustische Welle erzeugenden Hochfrequenz nachgeführt, damit wird gewährleistet, dass die Kopplung in die Faser optimal ist.

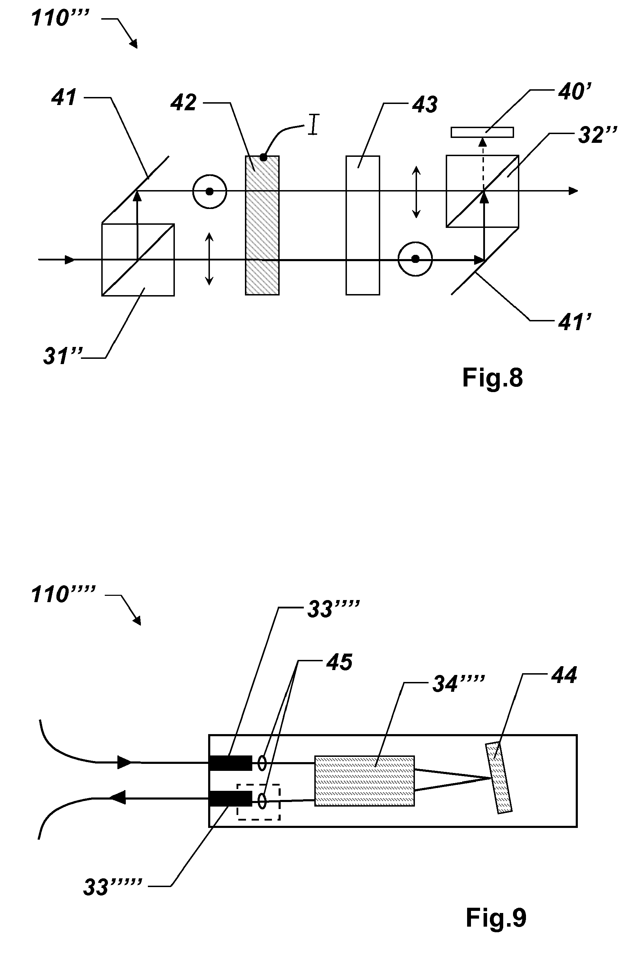

**Figur 8** zeigt eine erfindungsgemässe Ausführungsform einer Abschwächeinheit 110"', aufgebaut nach dem Faraday-Prinzip. Bekannte Baugruppen, welche auf dem magneto-optischen Faraday Effekt (basierend auf dem Zeeman Effekt) beruhen, sind optische Isolatoren und Zirkulatoren. Der Effekt beruht auf zirkularer Doppelbrechung, dessen Stärke durch Anlegen eines magnetischen Felds eingestellt werden kann. Zirkulare Doppelbrechung bewirkt eine räumliche Drehung des Polarisationsvektors um die Lichtausbreitungsachse. Dieser Effekt kann verwendet werden, um eine Abschwächeinheit mit schneller Schaltgeschwindigkeit und hoher Signaldynamik zu realisieren. Ausgehend von den Topologien von Isolatoren oder Zirkulatoren lässt sich durch Einstellen der Magnetfeldstärke die Lichtleistung am Ausgang einstellen.

In der Figur ist eine magneto-optische Abschwächeinheit 110"' dargestellt, welche von einer Topologie eines Zirkulators abgeleitet ist. Unpolarisiertes Licht am Eingang wird durch einen ersten polarisierenden Strahlteiler 31" aufgespaltet. Beide Strahlen treten vermittels Spiegelelementen 41,41' durch einen steuerbaren magneto-optischen Festkörper 42 (Faraday Rotator mit steuerbarem Magnetfeld durch Anlegen eines Stroms) und einen optisch aktiven Kristall 43, wobei letzterer die Polarisationsebene um 45 Grad dreht. Mit einem zweiten polarisierenden Strahlteiler 32" werden die zwei Strahlen abhängig von der jeweiligen Polarisationsrichtung in Richtung Ausgangskanal oder in Richtung eines Absorber-Elements 40' gelenkt, welches nicht weitergeleitetes Licht und Streulicht eliminiert.

Je nach Dimensionierung des Abschwächelements 110'" können die Komponenten unterschiedlich angeordnet sein. Insbesondere ist auch eine Ausbildung ohne den optisch aktiven Kristall 43 möglich. Die in der Figur dargestellte Topologie funktioniert wie folgt: Ein positiver Strom erzeugt ein magnetisches Feld in Strahlrichtung und dreht die Polarisationsvektoren um +45 Grad. Der aktive Kristall 43 (optischer Rotator) dreht die Polarisationsrichtung um +45 Grad weiter auf 90 Grad. Der zweite polarisierende Strahlteiler 32" leitet das Licht beider Kanäle somit auf den Ausgang. Die dargestellte Anordnung hat maximale Transmission. Ein negativer Strom hingegen erzeugt ein magnetisches Gegenfeld und dreht die Polarisationsvektoren um -45 Grad. Der aktive Kristall 43 dreht die Polarisationsrichtung um +45 Grad auf 0 Grad zurück. Der zweite polarisierende Strahlteiler 32" leitet nun das Licht beider Kanäle auf den Absorber und die Abschwächeinheit 110'" ist im Zustand maximaler Abschwächung.

Besonders wichtig ist wiederum, dass die Laufzeiten über die beiden Lichtkanäle im Subpikosekunden-Bereich identisch sind.

**Figur 9** zeigt schliesslich eine Ausführungsform eines Abschwächelements 110"" basierend auf der MOEMS Technologie (Micro-Opto-Electro-Mechanical Systems).

Bei diesem exemplarischen Beispiel eines MOEMS wird ein Spiegel 44 kontinuierlich rotiert mit einer hoch repetitiven Winkel/Spannung-Relation. Das Abschwächelement 110"" enthält ferner eine Faseraustritts- und Fasereintrittskopplung 33"",33""' mit zugehöriger Kollimationsoptik 34"". Die Ablenkung des Spiegels 44 bewegt den abgebildeten Lichtfleck 45 über den Faserkern der Fasereinkopplung 33""' und steuert damit die in die Faser gekoppelte Lichtleistung. Auch hier ist es wichtig, dass das nicht in den Faserkern gelenkte Licht von der Strahlachse fern gehalten oder so rasch wie möglich absorbiert wird, damit die effektive Signallaufzeit durch das Abschwächelement 110"" nicht gestört wird.

MOEMS-Elemente werden mit Spannungen von typischerweise 0 bis 5 Volt betrieben, wobei die Schaltzeiten aber bisher langsamer sind als bei den bisher erwähnten Beispielen, typischerweise etwa in der Grössenordnung der Schaltzeiten der optischen Faserverstärker. Ferner benötigt die Kennlinie der Abschwächung des analogen Bauteils in der Regel eine Temperaturkorrektur, zum Beispiel falls der Abschwächfaktor im open-loop Betrieb eingestellt werden soll. Neben einem Temperatursensor kann der erfinderische MOEMS-Abschwächer mittels einer Kollimationsoptik 34"" mit unüblich langer Brennweite ausgerüstet sein. Dadurch werden kürzere Schaltzeiten erreicht. Eine längere Brennweite der Kollimationsoptik 34"" hat beispielsweise den Effekt, dass der Drehspiegel 44 weiter von den Faserkopplungen 33"",33""' entfernt sein kann und somit bereits eine kleine Winkeländerung des Drehspiegels 44 zu einer vergleichsweise grossen Ablenkung des abgebildeten Lichtflecks 45 bezüglich dem Faserkern der Fasereinkopplung 33""' bewirkt. Gleichzeitig ist der Drehspiegel 44 mit einem rückseitigen Dämpfungselement (nicht dargestellt) versehen, um die Positionierzeit zusätzlich zu optimieren. Sehr vorteilhaft ist auch der niedrige, elektrische Leistungsverbrauch, womit praktisch kein temperaturinduzierter Drift durch Eigenaufwärmung existiert.

## Patentansprüche

1. Vermessungsgerät (1,1',1",1"'), insbesondere Tachymeter, Laserscanner, Profiler oder Lasertracker, zum Scannen von unkooperativen Objekten, insbesondere natürliche Objekte, zudem auch zum Scannen von kooperativen Objekten wie Reflektoren, mit einem elektronischen Laserdistanzmessmodul (10,10'), das einen optischen Sendekanal mit einer Sendeeinheit zur Erzeugung einer Lasermessstrahlung und einen optischen Empfangskanal mit einer Empfangseinheit für reflektierte Lasermessstrahlung umfasst,
**dadurch gekennzeichnet, dass**
• die Strahlführung im elektronischen Laserdistanzmessmodul vermittels einer Faseroptik ausgebildet ist, insbesondere bestehend aus Monomodefasern, und
• der optische Sendekanal des Laserdistanzmessmoduls eine Abschwächeinheit (11,11',11",110,110',110",110"',110"") für eine Abschwächung der von der Sendeeinheit erzeugten Lasermessstrahlung enthält, wobei die Abschwächeinheit derart ausgebildet ist, dass
o eine elektrisch steuerbare Einstellung von mindestens zwei unterschiedlichen Abschwächfaktoren bereitgestellt wird, und
o die Abschwächeinheit einen funktionalen Bezug zwischen Abschwächfaktor und elektrischer Ansteuerung aufweist, insbesondere wobei der funktionale Bezug über einen Temperaturbereich zwischen -20°C und 50°C bekannt ist, insbesondere zwischen -40°C und 70°C,
insbesondere wobei während des Scannens eine Einstellung der Abschwächeinheit mit unterschiedlichen Abschwächfaktoren mit einer Abschwächeinstellrate erfolgt, welche mindestens gleich hoch ist wie eine Referenzmessrate des Laserdistanzmessmoduls basierend auf einer hypothetisch erreichbaren Distanzmessrate des Laserdistanzmessmoduls für eine Laserdistanzmessung mit einer hypothetischen Amplitude im linearen Aussteuerbereich der Empfangseinheit,
insbesondere wobei die Sendeeinheit während des Scannens fortwährend modulierte, insbesondere gepulste, Sendesignale mit einer Modulationsrate höher als 100 kHz erzeugt, insbesondere mehrere MHz bis GHz, und wobei die Abschwächeinheit laufend von Sendesignal zu Sendesignal ansteuerbar ist.

2. Vermessungsgerät nach Anspruch 1,
**dadurch gekennzeichnet, dass**
während des Scannens die Einstellung der Abschwächeinheit derart erfolgt, dass der Empfangseinheit ein reflektiertes Empfangssignal mit einer Amplitude im linearen Aussteuerbereich der Empfangseinheit geliefert wird, basierend auf einem einzigen vorgängigen Empfangssignalpuls oder einer Folge von vorgängigen Empfangssignalpulsen,
insbesondere wobei die Abschwächeinstellrate derart angepasst ist, dass das reflektierte Empfangssignal mit einer Messeinstellrate für eine Einstellung des reflektierten Empfangssignals mit einer Amplitude im linearen Aussteuerbereich der Empfangseinheit geliefert wird, so dass eine Distanzmessrate erzielt wird, welche mindestens gleich hoch ist wie die Referenzmessrate, insbesondere wobei das reflektierte Empfangssignal bezogen auf einen einzigen unmittelbar vorhergehenden Empfangssignalpuls oder bezogen auf mehrere aufeinanderfolgende unmittelbar vorhergehende Empfangssignalpulse angepasst wird.

3. Vermessungsgerät nach Anspruch 1 oder 2,
**dadurch gekennzeichnet, dass**
die Abschwächeinheit derart ausgebildet ist, dass sie betrieben wird mit
• der Abschwächeinstellrate definiert durch eine Einstellzeit zwischen zwei aufeinander folgenden Abschwächfaktoren von weniger als 1000 ns, insbesondere weniger als 300 ns, und
• einem einstellbaren Verhältnis zwischen einem minimalem und einem maximalem Abschwächfaktor von einem Faktor von 10³ oder mehr, insbesondere 10⁴.

4. Vermessungsgerät nach einem der Ansprüche 1 bis 3,
**dadurch gekennzeichnet, dass**
das Laserdistanzmessmodul derart ausgebildet ist, dass im Sendekanal die Strahlführung der Lasermessstrahlung auf eine aberrationsfreie und/oder beugungsbegrenzte Weise erfolgt, insbesondere wobei die Abschwächeinheit auf einem interferometrischen Abschwächprinzip basiert.

5. Vermessungsgerät nach einem der Ansprüche 1 bis 4,
**dadurch gekennzeichnet, dass**
die Abschwächeinheit derart ausgebildet ist, dass die Abschwächung vermittels eines optisch aktiven Kristalls (30,37,42) erfolgt, insbesondere basierend auf einem Effekt aus mindestens einer der Gruppen
• der elektro-optischen Effekte (30),
• der akusto-optischen Effekte (37), und
• der magneto-optischen Effekte (42), insbesondere wobei die Abschwächeinheit derart ausgebildet ist, dass ein Hysterese-Effekt im optisch aktiven Kristall automatisch, insbesondere fortlaufend, kalibriert wird.

6. Vermessungsgerät nach einem der Ansprüche 1 bis 5,
**dadurch gekennzeichnet, dass**
die Abschwächeinheit derart ausgebildet ist, dass die Abschwächung auf einem opto-elektro-mechanischen Mikrosystem, nachfolgend MOEMS genannt, basiert.

7. Vermessungsgerät nach einem der Ansprüche 1 bis 6,
**dadurch gekennzeichnet, dass**
das Laserdistanzmessmodul und die Abschwächeinheit derart ausgebildet sind, dass ein Distanzfehler als Funktion des Abschwächfaktors automatisch, insbesondere fortlaufend, korrigiert wird.

8. Vermessungsgerät nach einem der Ansprüche 1 bis 7,
**dadurch gekennzeichnet, dass**
die Abschwächeinheit polarisationsfrei ausgebildet ist.

9. Vermessungsgerät nach einem der Ansprüche 1 bis 8,
**dadurch gekennzeichnet, dass**
die Abschwächeinheit derart ausgebildet ist, dass sie mindestens umfasst
• einen ersten polarisierenden Strahlteiler (31) zur Erzeugung eines ersten und eines zweiten Teilstrahls mit jeweils unterschiedlicher Polarisation, insbesondere einen polarisierenden Parallel-Strahlteiler oder eine Savart-Platte,
• einen optisch aktiven Kristall (30) um vermittels elektro-optischem Effekt die Polarisation von mindestens dem ersten Teilstrahl zu verändern, insbesondere wobei der optisch aktive Kristall ein optisch nichtlinearer Kristall und/oder ein phasenschiebender Kristall sei, und
• einen zweiten polarisierenden Strahlteiler (32) um die beiden Teilstrahlen wieder zusammenzuführen, insbesondere einen polarisierenden Parallel-Strahlteiler oder eine Savart-Platte.

10. Vermessungsgerät nach einem der Ansprüche 1 bis 8,
**dadurch gekennzeichnet, dass**
die Abschwächeinheit derart ausgebildet ist, dass sie mindestens umfasst
• einen ersten polarisierenden Strahlteiler (31') zur Erzeugung eines ersten und eines zweiten Teilstrahls mit jeweils unterschiedlicher Polarisation, insbesondere einen polarisierenden Parallel-Strahlteiler oder eine Savart-Platte,
• eine erste und eine zweite Mach-Zehnder Interferometer-Zelle (36,36') im ersten und zweiten Teilstrahl, wobei vermittels einer Veränderung der optischen Phase innerhalb der ersten Mach-Zehnder Interferometer-Zelle und/oder einer Veränderung der optischen Phase innerhalb der zweiten Mach-Zehnder Interferometer-Zelle eine Intensitätsänderung des ersten und zweiten Teilstrahls erzeugt wird, und
• einen zweiten polarisierenden Strahlteiler (32') um die beiden Teilstrahlen wieder zusammenzuführen, insbesondere einen polarisierenden Parallel-Strahlteiler oder eine Savart-Platte,
wobei ein Laufzeitunterschied zwischen dem ersten und dem zweiten Teilstrahl kleiner als 1 Pikosekunde gewährleistet wird.

11. Vermessungsgerät nach einem der Ansprüche 1 bis 8, **dadurch gekennzeichnet, dass**
die Abschwächeinheit derart ausgebildet ist, dass sie mindestens umfasst
• einen ersten polarisierenden Strahlteiler zur Erzeugung eines ersten und eines zweiten Teilstrahls mit jeweils unterschiedlicher Polarisation, insbesondere einen polarisierenden Parallel-Strahlteiler oder eine Savart-Platte,
• einen ersten und einen zweiten elektro-optischen Richtungskoppler im ersten und zweiten Teilstrahl, wobei vermittels einer Veränderung der optischen Transmission des ersten elektro-optischen Richtungskopplers und/oder einer Veränderung der optischen Transmission des zweiten elektro-optischen Richtungskopplers eine Intensitätsänderung des ersten und/oder des zweiten Teilstrahls erzeugt wird, und
• einen zweiten polarisierenden Strahlteiler um die beiden Teilstrahlen wieder zusammenzuführen, insbesondere einen polarisierenden Parallel-Strahlteiler oder eine Savart-Platte,
wobei ein Laufzeitunterschied zwischen dem ersten und dem zweiten Teilstrahl kleiner als 1 Pikosekunde gewährleistet wird.

12. Vermessungsgerät nach einem der Ansprüche 1 bis 8,
**dadurch gekennzeichnet, dass**
die Abschwächeinheit derart ausgebildet ist, dass sie mindestens umfasst
• einen akusto-optisch aktiven Kristall (37) um vermittels akusto-optischem Beugungseffekt als Funktion einer angelegten Ansteuerspannung und einer Beugungsordnung eine Intensitätsänderung zwischen dem einfallenden Lasermessstrahl und eines durch Beugung abgelenkten Teilstrahls zu erzeugen, und
• eine Kontrolleinheit um die Temperaturabhängigkeit eines Beugungswinkels mittels Nachführung einer die akustische Welle erzeugenden Hochfrequenz zu kompensieren,
insbesondere wobei für die Abschwächung der abgelenkte Strahl der ersten Beugungsordnung verwendet wird.

13. Vermessungsgerät nach einem der Ansprüche 1 bis 8,
**dadurch gekennzeichnet, dass**
die Abschwächeinheit derart ausgebildet ist, dass sie mindestens umfasst
• einen ersten polarisierenden Strahlteiler (31") zur Erzeugung eines ersten und eines zweiten Teilstrahls mit jeweils unterschiedlicher Polarisation,
• einen magneto-optisch aktiven Kristall (42) um vermittels magneto-optischem Faraday-Effekt, als Funktion eines eingestellten magnetischen Feldes, eine räumliche Drehung eines Polarisationsvektors von mindestens dem ersten Teilstrahl zu erzeugen, und
• einen zweiten polarisierenden Strahlteiler (32") um ein Ausgangssignal basierend auf mindestens dem veränderten ersten Teilstrahl zu erzeugen, insbesondere wobei die Abschwächeinheit weiter mindestens ein Element der folgenden Gruppen umfasst
• einen optisch aktiven Kristall (43), insbesondere ein Kristall welcher eine Polarisationsebene um 45 Grad dreht, und
• ein Absorberelement (40') um internes Streulicht zu reduzieren, insbesondere um Licht welches nicht zum Ausgangssignal beiträgt zu reduzieren,
wobei ein Laufzeitunterschied zwischen dem ersten und dem zweiten Teilstrahl kleiner als 1 Pikosekunde gewährleistet wird.

14. Vermessungsgerät nach einem der Ansprüche 1 bis 13,
**dadurch gekennzeichnet, dass**
die Abschwächeinheit derart ausgebildet ist, dass sie ein opto-elektro-mechanisches Mikrosystem umfasst, nachfolgend MOEMS genannt, welches mindestens umfasst
• einen Eingangskanal (33"") für die Lasermessstrahlung,
• eine Linse (34""),
• einen drehbaren Spiegel (44) und Mittel zur Einstellung von unterschiedlichen Winkelstellungen des Spiegels, und
• einen als optische Faser ausgebildeten Ausgangskanal (33""') für die am rotierenden Spiegel reflektierte Lasermessstrahlung,
wobei vermittels der Linse und einer Reflexion am rotierenden Spiegel ein Lichtfleck erzeugt wird, welcher durch die Rotation des Spiegels und einer eingestellten Winkelstellung des Spiegels über einen Faserkern einer Faser des Ausgangskanals gesteuert wird, wodurch eine unterschiedliche Lichtleistung der einfallenden Lasermessstrahlung in die Faser eingekoppelt wird.

15. Vermessungsgerät nach einem der Ansprüche 1 bis 14,
**dadurch gekennzeichnet, dass**
die Abschwächeinheit mindestens ein Element der folgenden Gruppen umfasst
• eine Kalibrationseinheit zur Kalibration einer Transitzeit als Funktion des eingestellten Abschwächfaktors,
• eine Fixabschwächeinheit zur Reduktion von Mehrfachreflexionen,
• eine Faser mit abgewinkeltem Faserende, insbesondere mit einem Winkel von 8 Grad, zur Reduktion von Mehrfachreflexionen,
• ein Absorberelement zur Löschung des abgelenkten Lichts und zur Erzeugung einer konstanten Transitzeit unabhängig vom eingestellten Abschwächfaktor, und
• ein einem optisch aktiven Kristall vorgeschalteter Zirkulator zum Abfangen von Rückreflexionen.
